# EUROPEAN PATENT APPLICATION

(11) **EP 2 529 951 A1**
(43) Date of publication of application: **05.12.2012**
(21) Application number: 11734809.4
(22) Date of filing: 25.01.2011
(51) Int. Cl.: B60C 11/00, B60C 11/04, B60C 11/11, B60C 11/117

(54) **TIRE**

(30) Priority: 25.01.2010 JP 2010013202
(71) Applicant: Bridgestone Corporation, Tokyo 104-8340 (JP)
(72) Inventor: KOGA, Hiroaki, Tokyo 187-8531 (JP)
(74) Representative: Waldren, Robin Michael
(86) International application number: PCT/JP2011/051284
(87) International publication number: WO 2011/090203

(57) **Abstract**

A tire 1 has a plurality of land rows including a center land row C having a plurality of center blocks 50C defined by center lug grooves 40C, and a side land row S having a plurality of side blocks 50S defined by side lug grooves 40S. The tire has (RG1W/RG2W)/(L2/L1) in a range from 0.6 to 1.12 in a state where the tire is in contact with a road surface. 'L1' is the greatest ground contact length of the center land row in the tire circumferential direction, 'L2' is a ground contact length of the side land row in the tire circumferential direction along a center thereof in the tread width direction, 'RG1W' is a width of the center lug groove, and 'RG2W' is a width of the side lug groove.

## Description

### [TECHNICAL FIELD]

The present invention relates to a tire on which multiple blocks are formed by main grooves and lug grooves.

### [BACKGROUND ART]

Conventionally, for pneumatic tires (hereinafter, tires) mounted on passenger vehicles and the like, a tread pattern in which multiple blocks are formed by main grooves extending in the tire circumferential direction and lug grooves extending in the tread width direction has been widely used to secure the steering stability.

For example, a tire with lug grooves inclining to the tire equator line has been known. According to this tire, part of blocks is always in contact with the road surface, thereby improving the steering stability.

### [PRIOR ART DOCUMENT]

### [PATENT DOCUMENT]

Patent Document 1: Japanese Patent Application Publication No. 64-18707 (Page 1, Figs. 2 and 3)

### [SUMMARY OF THE INVENTION]

Meanwhile, in general, in order to secure the ground contact area of a tire (blocks) during cornering and the like for a more secure improvement in steering stability, side blocks located in side portions of the tread are formed larger in width than center blocks located at the center of the tread (e.g. on the tire equator line).

However, the conventional tires mentioned above have a problem as below. Specifically, the rigidity of the narrow center block is lower than the rigidity of the wide side block. This leads to a problem that the difference in ground contact pressure between the center block and the side block causes uneven wear. Also, there still is room for a further improvement in steering stability at present.

The purpose of the present invention is to provide a tire suppressing the occurrence of uneven wear and also securely improving the steering stability in a case where multiple blocks are formed by main grooves and lug grooves.

To solve the above-mentioned problem, the present invention has a following feature. The first feature of the present invention is a tire (pneumatic tire 1) wherein a plurality of land rows are formed by main grooves (main grooves 21, 22, 23, and 24) extending in a tire circumferential direction, the land rows include a center land row (center land row C) located at a center of a tread including a tire equator line (tire equator line CL), and having a plurality of center blocks (center blocks 50C) defined by center lug grooves (center lug grooves 40C) extending in a tread width direction, and a side land row (side land row S) located on each of side portions of the tread provided respectively on outermost sides in the tread width direction, and having a plurality of side blocks (side blocks 40S) defined by side lug grooves (side lug grooves C) extending in the tread width direction, and the tire is configured to have (RG1W/RG2W)/(L2/L1) in a range from 0.6 to 1.12 in a state where the tire is in contact with a road surface, where 'L1' is the greatest ground contact length of the center land row in the tire circumferential direction, 'L2' is a ground contact length of the side land row in the tire circumferential direction along a center thereof in the tread width direction, 'RG1W' is a width of each of the center lug grooves in a direction perpendicular to the extending direction thereof, and 'RG2W' is a width of each of the side lug grooves in the direction perpendicular to the extending direction thereof.

Here, the state where the tire is in contact with the road surface refers, for example, to a state where the tire is mounted on a normal rim, and a normal internal pressure and a normal load are applied. Note that the normal internal pressure is an air pressure corresponding to the maximum load capacity according to JATMA (Japan Automobile Tyre Manufactures Association) Year Book 2008, and the normal load is a load equivalent to the maximum load capacity in a case of using a single wheel according to JATMA (Japan Automobile Tyre Manufactures Association) Year Book 2008. Outside Japan, the normal internal pressure is an air pressure corresponding to the maximum load (maximum load capacity) of a single wheel described in any of the standards given below, and the normal load is the maximum load (maximum load capacity) of a single wheel in an applied size described in any of the standards given below. The standards are defined by industrial standards that are effective in the region where the tire is manufactured or used, and are, for example, "Year Book of The Tire and Rim Association Inc." in U.S.A. and "Standards Manual of The European Tire and Rim Technical Organization" in Europe.

According to the above feature, the tire is configured to have (RG1W/RG2W) / (L2/L1) in a range from 0.6 to 1.12. According to this, in general, a ground contact length in the tire circumferential direction is often secured in each center block having a width (W1) smaller than the width (W2) of each side block, for example. Thus, the rigidity of the center block and the rigidity of the side block are likely to be even. Accordingly, it is possible to suppress the occurrence of uneven wear due to a difference in ground contact pressure between the center block and the side block. In addition, the fact that the rigidity of the center block and the rigidity of the side block are likely to be even makes it possible to improve the steering stability more securely.

Another feature of the present invention is the tire, wherein in the state where the tire is in contact with the road surface, a ground contact area (A1) of the center land row is smaller than a ground contact area (A2) of the side land row.

Another feature of the present invention is the tire, wherein in the state where the tire is in contact with the road surface, a ground contact area of a side (GAout) situated outside the tire equator line when the tire is mounted on a vehicle is greater than a ground contact area of a side (GAin) situated inside the tire equator line when the tire is mounted on the vehicle.

Another feature of the present invention is the tire, wherein the center lug grooves are provided at positions offset from the side lug grooves in the tire circumferential direction.

The present invention provides a tire suppressing the occurrence of uneven wear and also securely improving the steering stability in a case where multiple blocks are formed by main grooves and lug grooves.

### [Brief Description of the Drawings]

[Fig. 1] Fig. 1 is a perspective view showing part of the pneumatic tire 1 of the embodiment.
[Fig. 2] Fig. 2 is a view showing the shape of the tread surface of the pneumatic tire 1 of the embodiment in a state of being in contact with the road surface.
[Fig. 3] Fig. 3 is a view showing the shape of the tread surface of the pneumatic tire 1 of the other embodiment in a state of being in contact with the road surface.

### [MODES FOR CARRYING OUT THE INVENTION]

Next, embodiments of a pneumatic tire of the present invention will be described with reference to the drawings. Specifically, the description will be given of (1) Configuration of Pneumatic Tire, (2) Relationships between Land Rows, (3) Comparative Evaluations, (4) Operations and Effects, and (5) Other Embodiments.

Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Configuration of Pneumatic Tire

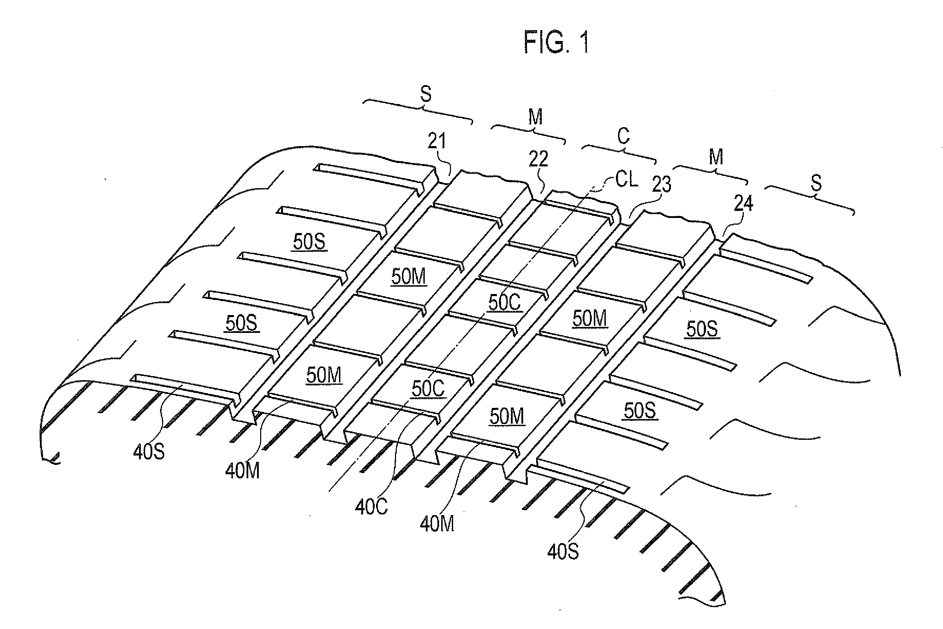

First, the configuration of a pneumatic tire 1 of an embodiment will be described with reference to the drawings. Fig. 1 is a perspective view showing part of the pneumatic tire 1 of the embodiment. Note that the pneumatic tire 1 is a general radial tire including a bead part, a carcass layer, a belt layer, and a tread part (unillustrated). Moreover, the pneumatic tire 1 may be filled with an inert gas such as nitrogen gas instead of air.

As shown in Fig. 1, the tread surface of the pneumatic tire 1 is symmetrical about a tire equator line CL extending along the center of the pneumatic tire 1. On the tread surface of the pneumatic tire 1, multiple land rows are formed by main grooves 21, 22, 23, and 24 extending in the tire circumferential direction (direction TC). Specifically, the land rows include a center land row C, side land rows S, and middle land rows M.

The center land row C is located at the center of the tread which includes the tire equator line CL. The center land row C includes multiple center blocks 50C defined by center lug grooves 40C extending in the tread width direction (direction TW). Note that the center lug grooves 40C are provided at positions offset from side lug groves 40S described below in the tire circumferential direction.

The side land rows S are located respectively in side portions of the tread that are provided on the outermost sides in the tread width direction. Each side land row S includes multiple side blocks 50S defined by the side lug grooves 40S extending in the tread width direction.

The middle land rows M are located between the center land row C and the side land rows S, respectively. Each middle land row M includes multiple middle blocks 50M defined by middle lug grooves 40M extending in the tread width direction.

### (2) Relationships between Land Rows

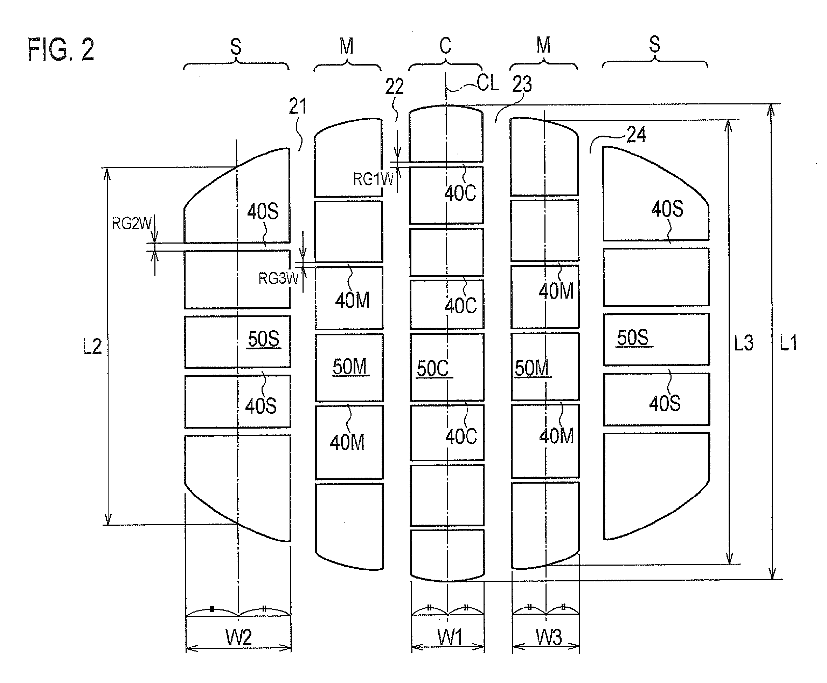

Next, the relationships between the land rows mentioned above will be described. Specifically, with reference to Fig. 2, the description will be given of (2.1) Relationship between Center Land Row C and Side Land Row S, and (2.2) Relationship between Middle Land Row M and Side Land Row S. Fig. 2 is a view showing the shape of the tread surface of the pneumatic tire 1 of the embodiment in a state of being in contact with the road surface.

### (2.1) Relationship between Center Land Row C and Side Land Row S

First, the relationship between the center land row C and each side land row S will be described. As shown in Fig. 2, the pneumatic tire 1 is configured to have (RG1W/RG2W)/(L2/L1) in a range from 0.6 to 1.12 in a state where the pneumatic tire 1 is in contact with the road surface, where 'L1' is the greatest ground contact length of the center land row C in the tire circumferential direction 'L2' is the ground contact length of the side land row S in the tire circumferential direction along the center thereof in the tread width direction, 'RG1W' is the width of each center lug groove 40C in a direction perpendicular to the extending direction thereof (the tread width direction in the embodiment), and 'RG2W' is the width of each side lug groove 40S in the direction perpendicular to the extending direction thereof.

Note that in the embodiment, the greatest ground contact length of the center land row C in the tire circumferential direction refers to the ground contact length of the center land row C in the tire circumferential direction on the tire equator line CL.

Moreover, in a state where the pneumatic tire 1 is in contact with the road surface, the ground contact area of the center land row C (A1) is smaller than the ground contact area of the side land row S (A2) (A1<A2).

Furthermore, the width of the center land row C (center blocks 50C) in the tread width direction (W1) is smaller than the width of the side land row S (side blocks 50S) in the tread width direction (W2) (W1<W2).

### (2.2) Relationship between Middle Land Row M and Side Land Row S

Next, the relationship between each middle land row M and each side land row S will be described. As shown in Fig. 2, the pneumatic tire is configured to have (RG3W/RG2W) / (L2/L3) in a range from 0. 6 to 1.12, where 'L2' is the ground contact length of the side land row S in the tire circumferential direction along the center thereof in the tread width direction, 'L3' is the ground contact length of the middle land row M in the tire circumferential direction along the center thereof in the tread width direction, 'RG2W' is the width of each side lug groove 40S in the direction perpendicular to the extending direction thereof, and 'RG3W' is the width of each middle lug groove 40M in the direction perpendicular to the extending direction thereof.

Moreover, in a state where the pneumatic tire 1 is in contact with the road surface, the ground contact area of the middle land row M (A3) is equal to or greater than the ground contact area of the center land row C (A1) but is smaller than the ground contact area of the side land row S (A2) (A1≤A3<A2).

Furthermore, the width of the middle land row M (middle blocks 50M) in the tread width direction (W3) is equal to or greater than the width of the center land row C (W1) but is smaller than the width of the side land row S (W2) (W1≤W3<W2).

### (3) Comparative Evaluations

Next, to make an effect of the present invention clearer, comparative evaluations will be described which were performed by using pneumatic tires of the following comparative examples and examples. Data on each pneumatic tire was measured under the conditions described below. Note that the present invention is not limited by these examples.

- Tire size: 205/55R16
- Rim size: 16×6.5JJ
- Vehicle condition: domestic passenger vehicle (engine displacement 2000 cc)
- Internal pressure condition: 230 kPa
- Load condition: normal load

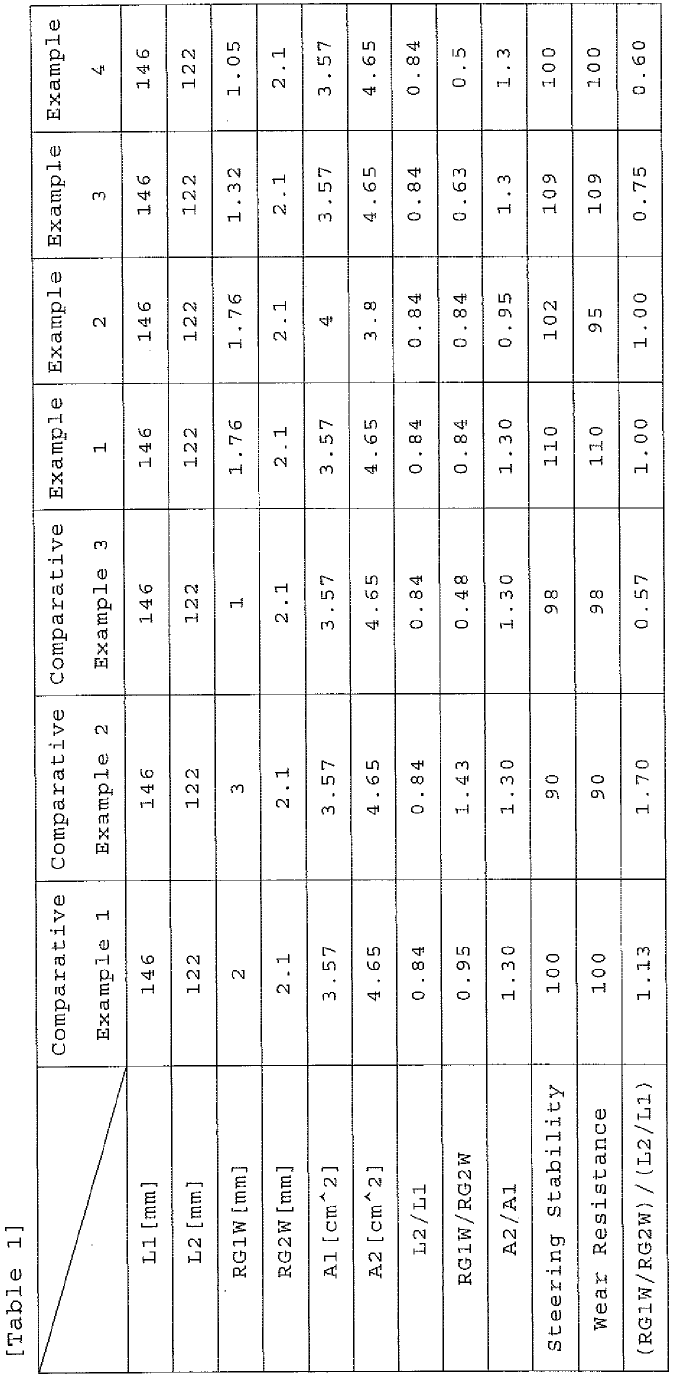

### (3.1) Steering Stability

In a test course with a dry rough road having irregularities (bumps) to imitate general roads, the vehicle equipped with each pneumatic tire was driven straight at speeds of 60 km/h and 80 km/h, and the steering angle required to correct the steering due to disturbance was measured. The largest steering angle for the steering correction of the vehicle equipped with the pneumatic tire of Comparative Example 1 being set to 100, the largest steering angles for the steering correction of the vehicles equipped with the other pneumatic tires are indexed. Note that the larger the index, the better the steering stability.

According to the result, as shown in Table 1, it is found that the vehicles equipped with the pneumatic tires of Examples 1 to 4 have better steering stabilities than the vehicles equipped with the pneumatic tires of Comparative Examples 1 to 3.

### (3.2) Uneven Wear Performance

Each pneumatic tire was mounted on an indoor drum wear testing machine. With the wear resistance (amount of wear/distance) of a remaining groove of the pneumatic tire of Comparative Example 1 after rotations equivalent to 5000 km being set to 100, the wear resistances of the other pneumatic tires are indexed. Note that the larger the index, the better the uneven wear performance.

According to the result, as shown in Table 1, it is found that the pneumatic tire of Example 1 has a better uneven wear performance than the vehicles equipped with the pneumatic tires of Comparative Examples 1 to 3. It is found that the pneumatic tire of Example 2 has a better uneven wear performance than the pneumatic tire of Comparative Example 2 and is able to secure almost the same uneven wear performance as the pneumatic tires of Comparative Examples 1 and 3. It is found that the tire of Example 3 has a better uneven wear performance than the vehicles equipped with the pneumatic tires of Comparative Examples 1 to 3. The tire of Example 4 has a better uneven wear performance than the pneumatic tires of Comparative Examples 2 and 3 and is able to secure the same uneven wear performance as the pneumatic tire of Comparative Example 1.

### (4) Operations and Effects

In the embodiment, the pneumatic tire is configured to have (RG1W/RG2W) / (L2/L1) in a range from 0.6 to 1.12. According to this, in general, a ground contact length in the tire circumferential direction is often secured in each center block 50C having a width (W1) smaller than the width (W2) of each side block 50S. Thus, the rigidity of the center block 50C and the rigidity of the side block 50S are likely to be even. Accordingly, it is possible to suppress the occurrence of uneven wear due to a difference in ground contact pressure between the center block 50C and the side block 50S. In addition, the fact that the rigidity of the center block 50C and the rigidity of the side block 50S are likely to be even makes it possible to improve the steering stability more securely.

Note that if (RG1W/RG2W)/(L2/L1) is below 0.6, the ground contact length of the side block 50S in the tire circumferential direction relative to that of the center block 50C becomes too short, so that the rigidity of the center block 50C and the rigidity of the side block 50S are less likely to be even. On the other hand, if (RG1W/RG2W)/(L2/L1) is above 1.12, the ground contact length of the center block 50C in the tire circumferential direction relative to that of the side block 50S becomes too short, so that the rigidity of the center block 50C and the rigidity of the side block 50S are less likely to be even. The side block 50S with an extremely higher rigidity increases the likelihood of the occurrence of rollover, especially for four-wheel drive vehicles with a high center of gravity.

In the embodiment, in a state where the pneumatic tire 1 is in contact with the road surface, the ground contact area of the center land row C (A1) is smaller than the ground contact area of each side land row S (A2) (A1<A2). According to this, during normal straight travel, the side land row S (side blocks 50S) is not in a state of entirely contacting the road surface but in a state of contacting the road surface only at an inner region in the tread width direction. Hence, during straight travel, the difference in ground contact pressure between each center block 50C and each side block 50S can be made small. On the other hand, the steering stability during cornering is securely improved since the ground contact area of the side land row S (A2) is greater than the ground contact area of the center land row C (A1). Accordingly, the steering stability during straight travel and the steering stability during cornering can both be achieved.

In the embodiment, the center lug grooves 40C are provided at positions offset from the side lug grooves 40S in the tire circumferential direction. According to this, part of the center blocks 50C or the side blocks 50S is always in contact with the road surface, thereby further improving the steering stability.

In the embodiment, the pneumatic tire is configured to have (RG3W/RG2W) / (L2/L3) in a range from 0.6 to 1.12. According to this, a ground contact length in the tire circumferential direction is secured in the middle blocks 50M since the side blocks 50S are wider than the widths of the middle blocks 50M (W3). Thus, the rigidity of each middle block 50M and the rigidity of each side block 50S are likely to be even. Accordingly, it is possible to suppress the occurrence of uneven wear due to a difference in ground contact pressure between the middle block 50M and the side block 50S and also to improve the steering stability securely.

Note that if (RG3W/RG2W)/(L2/L3) is below 0.6, the ground contact length of the side block 50S in the tire circumferential direction relative to that of the middle block 50M becomes too short, so that the rigidity of the middle block 50M and the rigidity of the side block 50S are less likely to be even. On the other hand, if (RG3W/RG2W)/(L2/L3) is above 1.12, the ground contact length of the middle block 50M in the tire circumferential direction relative to that of the side block 50S becomes too short, so that the rigidity of the middle block 50M and the rigidity of the side block 50S are less likely to be even. The side block 50S with an extremely higher rigidity increases the likelihood of the occurrence of rollover, especially for four-wheel drive vehicles with a high center of gravity.

In the embodiment, in a state where the pneumatic tire 1 is in contact with the road surface, the ground contact area of each middle land row M (A3) is equal to or greater than the ground contact area of the center land row C (A1) but is smaller than the ground contact area of each side land row S (A2) (A3≤A3<A2). According to this, during normal straight travel, the side land row S (side blocks 50S) is not in a state of entirely contacting the road surface but in a state of contacting the road surface only at an inner region in the tread width direction. Hence, during straight travel, the difference in ground contact pressure between each middle block 50M and each side block 50S can be made small. On the other hand, the steering stability during cornering is securely improved since the ground contact area of the side land row S (A2) is greater than the ground contact area of the center land row C (A1). Accordingly, the steering stability during straight travel and the steering stability during cornering can both be achieved.

### (5) Other Embodiments

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For example the embodiment of the present invention can be changed as below. Specifically, while the tire has been described as the pneumatic tire 1 filled with air or nitrogen gas, the tire is not limited to this and may be a solid tire filled neither with air or nitrogen gas.

Moreover, while the tread surface of the pneumatic tire 1 has been described as being symmetrical about the tire equator line CL, the tread surface of the pneumatic tire 1 is not limited to this and may be asymmetrical about the tire equator line CL.

For example, the center land row C may be provided on both sides of the tire equator line CL. In this case, the greatest ground contact length of each center land row C in the tire circumferential direction is the ground contact length of the center land row C in the tire circumferential direction at an inner side in the tread width direction.

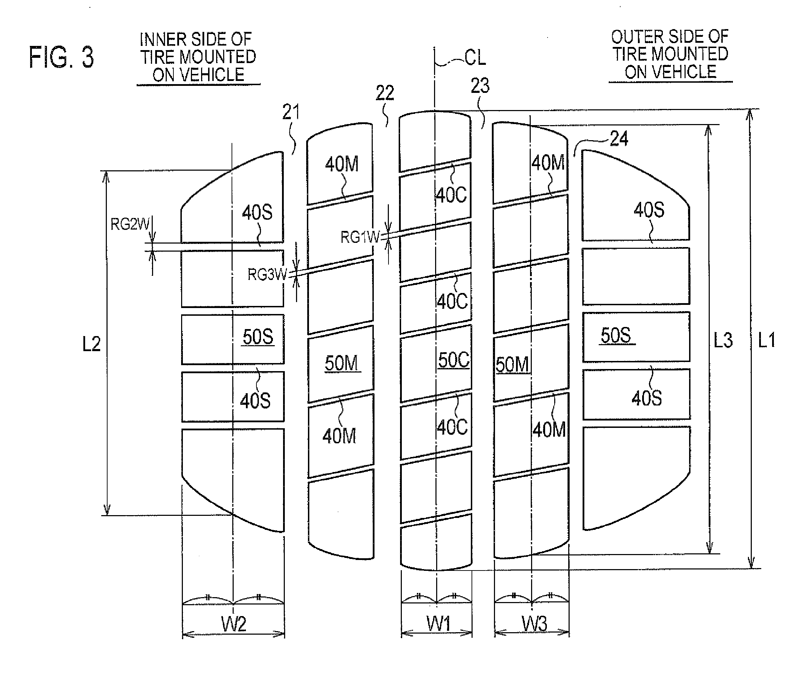

Moreover, when mounted on a vehicle in a negative camber, the pneumatic tire 1 may be set at a negative camber angle as shown in Fig. 3, for example. In this case, in a state where the pneumatic tire 1 is in contact with the road surface, the ground contact area of a side (GAout) situated outside the tire equator line CL when the pneumatic tire 1 is mounted on the vehicle may be greater than the ground contact area of a side (GAin) situated inside the tire equator line CL when the pneumatic tire 1 is mounted on the vehicle. In this way, the suppression of uneven wear and the steering stability can both be achieved even when the pneumatic tire 1 is set at a negative camber angle.

Furthermore, while the center lug grooves, the side lug grooves 40S, and the middle lug grooves 40M have been described as extending in the tread width direction (i.e. being perpendicular to the tire equator line CL), these grooves are not limited to this, and at least one of them may incline to the tire equator line CL as shown in Fig. 3, for example.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2010-013202 (filed on January 25, 2010) is incorporated herein by reference.

### [INDUSTRIAL APPLICABILITY]

A tire of the present invention is useful as a tire used in vehicles and the like since being capable of suppressing the occurrence of uneven wear and also securely improving the steering stability in a case where multiple blocks are formed by main grooves and lug grooves.

## Claims

1. A tire wherein
a plurality of land rows are formed by main grooves extending in a tire circumferential direction,
the land rows include
a center land row located at a center of a tread including a tire equator line, and having a plurality of center blocks defined by center lug grooves extending in a tread width direction, and
a side land row located on each of side portions of the tread provided respectively on outermost sides in the tread width direction, and having a plurality of side blocks defined by side lug grooves extending in the tread width direction, and
the tire is configured to have (RG1W/RG2W) / (L2/L1) in a range from 0.6 to 1.12 in a state where the tire is in contact with a road surface, where 'L1' is the greatest ground contact length of the center land row in the tire circumferential direction, 'L2' is a ground contact length of the side land row in the tire circumferential direction along a center thereof in the tread width direction, 'RG1W' is a width of each of the center lug grooves in a direction perpendicular to the extending direction thereof, and 'RG2W' is a width of each of the side lug grooves in the direction perpendicular to the extending direction thereof.

2. The tire according to claim 1, wherein in the state where the tire is in contact with the road surface, a ground contact area (A1) of the center land row is smaller than a ground contact area (A2) of the side land row.

3. The tire according to claim 1 or 2, wherein in the state where the tire is in contact with the road surface, a ground contact area of a side (GAout) situated outside the tire equator line when the tire is mounted on a vehicle is greater than a ground contact area of a side (GAin) situated inside the tire equator line when the tire is mounted on the vehicle.

4. The tire according to any one of claims 1 to 3, wherein the center lug grooves are provided at positions offset from the side lug grooves in the tire circumferential direction.
